# EUROPEAN PATENT SPECIFICATION

(11) **EP 0 754 279 B1**
(45) Date of publication and mention of the grant of the patent: **29.12.1999**
(21) Application number: 95915358.6
(22) Date of filing: 30.03.1995
(51) Int. Cl.: F16L 3/24, F16L 3/22

(54) **CLAMP FOR CABLE**
KABELBINDER
SERRE-CABLE

(30) Priority: 05.04.1994 SE 9401127
(43) Date of publication of application: 22.01.1997
(73) Proprietor: TELIA AB, 123 86 Farsta (SE)
(72) Inventor: NYRELL, Carl-Göran, S-234 42 Lomma (SE); ANDERSSON, Kenneth, S-271 95 Ystad (SE); HJORT, Bo, S-223 77 Lund (SE)
(74) Representative: Akerman, Marten Lennart
(86) International application number: SE9500340
(87) International publication number: WO9527164

(56) References cited:
- DE-A- 2 053 828
- DE-B- 1 236 620
- DE-C- 977 480

## Description

### FIELD OF THE INVENTION

The present invention relates to a clamp for fixing cables, principally on masts where the cables are exposed to the effects of the wind and weather.

### PRIOR ART

It is already known to use clamps for this purpose. The clamps according to the prior art comprised a U-shaped stirrup, which enclosed the cables, and a thrust washer, which was pressed against the cables with the aid of a screw. The screw was tightened with a defined torque using a torque wrench, and the screw was locked fast with the aid of a locking nut and locking washer.

A number of problems were associated with the prior art. The fitting of the clamp was complicated, since a special tool was required, and screwing by hand is a relatively time-consuming operation. Since the screws also intend to come loose despite the locking, a follow-up inspection and maintenance were required at regular intervals in order to check that the screws had not come loose. In this case, the screws were once again fixed using the torque wrench.

If the fitter chose not to use the torque wrench, there was additionally a risk of damaging the cable if the screw was tightened too hard.

There was also a risk of the fitter injuring himself on the screws, which stuck relatively far out. It was not uncommon for the fitters to strike their elbows and legs when climbing the masts.

The clamp according to the prior art was also expensive to manufacture on account of the fact that the hole in the stirrup had to be threaded, and on account of the screws and the nuts.

A clamp, which overcomes some of the difficulties mentioned above, has been suggested by the German patent DE-C-977 480, in which a device not using any screws or nuts is disclosed. The clamp according to the referred patent comprises a U-shaped stirrup, the ends of which are hooked in order to engage a crossbar at which a cable is to be fixed. A thrust washer which can slide between the legs of the stirrup is provided, devised to distribute a clamping pressure on the cable towards the crossbar. Instead of using a screw, however, the compressing force is provided by a helical spring arranged between the bend of the stirrup and the thrust washer. Since the screw is removed there is no need to make follow-up inspections or readjustments: provided a proper material is used for the clamp, the spring will sustain its pressure regardless of weather.

A problem with this technique is that it requires that the fitter compresses the spring when applying it to a cable. This can be particularly troublesome if more than one cable is to be fitted with one clamp.

The present invention solves the above mentioned problems by providing a spring-loaded clamp which can be locked in a compressed position. This way the fitting of the clamp is facilitated compared to prior art.

### SUMMARY OF THE INVENTION

The present invention thus makes available a clamp device for fixing at least one cable on a crossbar, the device comprising a U-shaped stirrup, which encloses the cable, and a thrust washer for distributing a clamping pressure on the cable.

A spring device applies an adapted compressive force on the thrust washer, and said spring device comprises a control lever, which permits locking of the spring device in the compressed position for fitting of the clamp. The control lever also permits disengagement of the locking action so that the spring device exerts its force against the thrust washer.

Further embodiments of the invention are specified in the attached patent claims.

### BRIEF DESCRIPTION OF THE DRAWINGS

The invention is described in detail below, with reference to the attached drawings in which:
Figure 1 is a perspective view of a preferred embodiment of the invention.
Figure 2 is a perspective view similar to Figure 1, but with the spring left out,
Figure 3 is a top view of an intermediate washer,
Figure 4 is a side view of the intermediate washer,
Figure 5 is a perspective view of the intermediate washer, and
Figure 6 is a side view of a clamp according to the present invention mounted on a crossbar.

### DETAILED DESCRIPTION OF PREFERRED EMBODIMENTS

The invention relates to a clamp for fitting cables, for example on masts. According to the invention, a spring device is arranged to generate an appropriate clamping force under all circumstances. The spring device consists expediently of a helical spring of acid-resistant steel, which is dimensioned so as to generate the appropriate force, and a control lever capable of locking the spring device in a compressed position.

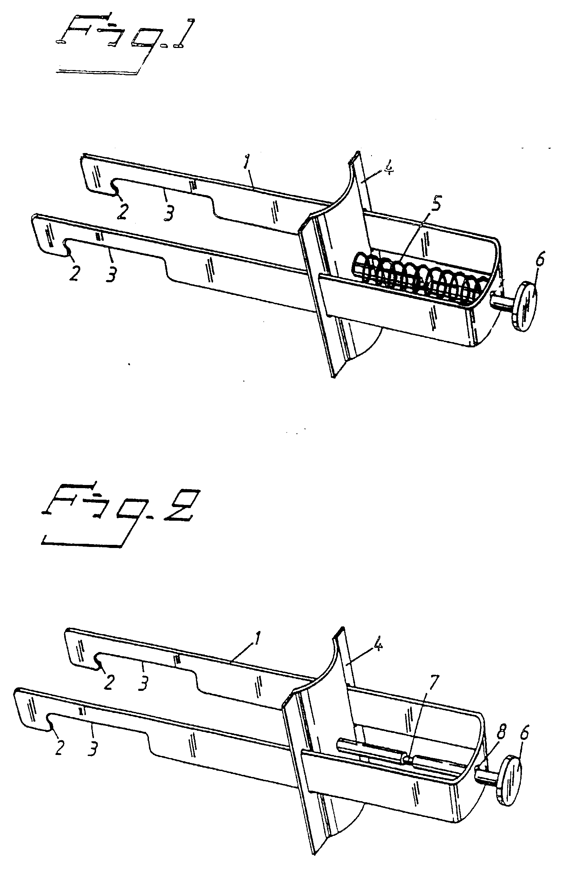

Figure 1 shows a preferred embodiment of the invention. The clamp consists of a U-shaped stirrup 1, which encloses the cables (see Figure 6). The clamp is hooked securely, via hooks 2 at a recess 3 in the legs of the stirrup, about a crossbar on, for example, a radio mast. A thrust washer 4 distributes the force from a spring 5 against the cables, and a control lever 6 is mounted on the thrust washer 4.

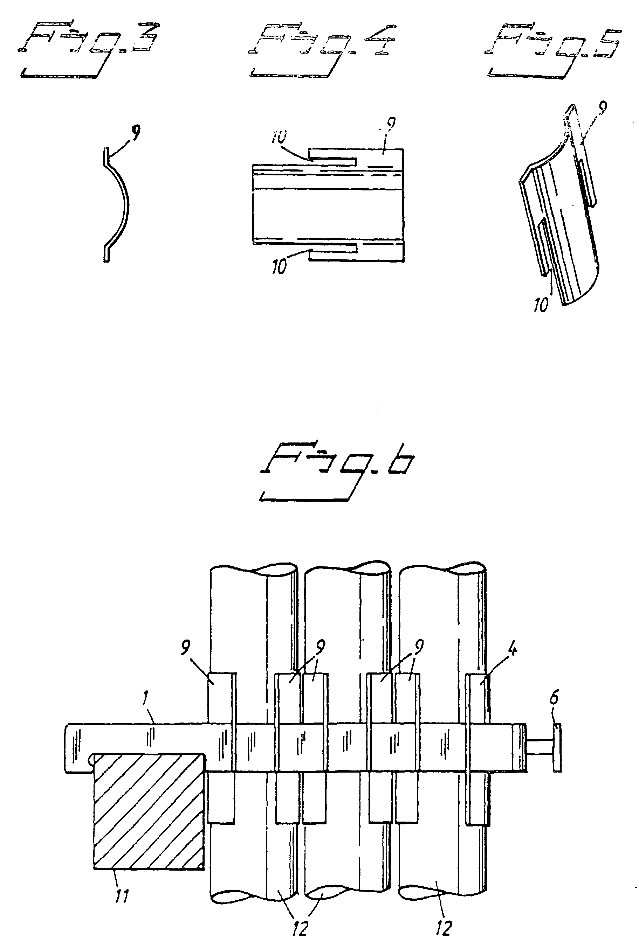

In Figure 2 the embodiment illustrated in Figure 1 is shown without the spring 5, so as to show the control lever more clearly. The control lever consists of a rod, which runs through a hole 8 in the stirrup. In the rod there is a recessed part 7, which can be made secure in the hole 8, which is similar in shape to a keyhole. Spring 5 runs round the rod, between the stirrup 1 and the thrust washer 4. as is illustrated in Figure 1. By pulling on the control lever 6, the spring can be compressed and can be locked with the aid of the recessed part 7 and the hole 8 in order to facilitate the fitting of the clamp, as is described below.

Figures 3, 4 and 5 show an intermediate washer 9 in different views. The intermediate washer 9 is intended to be placed between cables and between the cable and the crossbar in the mast in order to distribute the binding pressure and in this way to avoid damage to the cables. The clamp also functions per se without metal washers. The intermediate washer 9 has recesses 10, which are open at the bottom, so that the intermediate washer 9 can be placed on the stirrup 1 from above.

Figure 6 shows the clamp according to the invention being used to secure three cables 12 on a crossbar 11 of a mast, for example a radio mast.

Fitting of the preferred embodiment of the invention proceeds as follows. The spring 5 is tensioned with the aid of the control lever 6 and is locked in the tensioned position with the aid of the recessed part 7 and the hole 8. The fitter thus carries a number of clamps, which have been tensioned in advance. The legs 1 of the stirrup are slipped over the cables and are hooked securely about the crossbar 11 without the spring having to be compressed. The intermediate washers 9 are then put into place without it being necessary to work against the force of the spring. The spring is then released by pushing on the control lever 6 so that the locking action is disengaged. The fitting is then complete and does not require any maintenance, since the spring cannot be shaken loose by the effects of the wind and weather. Disassembly is carried out in reverse order. An advantage with the clamp according to the invention is that the spring does not need to be compressed during the actual fitting of the clamp, whereby fitting is quicker and simpler compared with the prior art.

It will be clear that a person skilled in this field will be able to make many modifications to the present embodiments without departing from the concept and from the scope of the invention. For example, spring devices other than helical springs can be used, and the spring can be locked in the compressed position in many different ways. The scope of the invention is limited only by the patent claims attached.

## Claims

1. Clamp device for fixing at least one cable (12) on a crossbar (11), the device comprising a U-shaped stirrup (1) which encloses the cable (12), and a thrust washer (4) for distributing a clamping pressure on the cable (12), and a spring device (5) applies an adapted compressive force on the thrust washer (4), characterized by a control lever (6) which permits locking of the spring device in the compressed position for fitting of the clamp and permits disengagement of the locking action so that the spring device exerts its force against the thrust washer.

2. Clamp device according to Claiml, characterized in that the control lever comprises a rod with a blocking recessed part (7) which can be locked in a hole (8) in the stirrup (1), through which hole (8) the rod runs.

3. Clamp device according to claim 1 or 2, characterized in that the spring device (5) is a helical spring.

4. Clamp device according to claim 1, 2 or 3, characterized in that intermediate washers (9) are placed between the cable (12) and the crossbar (11) and, where appropriate, between cables (12).

5. Clamp device according to Claim 4, characterized in that each intermediate washer (9) has recesses (10) which are open at the bottom so as to be placed on the stirrup (1) from above.

## Patentansprüche

1. Klammer zum Befestigen mindestens eines Kabels (12) an einem Träger (11), mit einem U-förmigen Bügel (1), der das Kabel (12) umschließt, einer Andrückscheibe (4) zum Verteilen eines Klemmdrucks auf das Kabel (12), und eine Federanordnung (5) , die auf die Andrückscheibe (4) eine angepaßte Kompressionskraft ausübt,
**gekennzeichnet** durch einen Betätigungshebel (6), der die Verriegelung der Federanordnung in der komprimierten Position für das Anbringen der Klammer ermöglicht und das Lösen der Verriegelungswirkung ermöglicht, so daß die Federanordnung ihre Kraft auf die Andrückscheibe ausübt.

2. Klammer nach Anspruch 1,
dadurch **gekennzeichnet ,** daß der Betätigungshebel eine Stange mit einer Verriegelungs-Einschnürung (7) aufweist, die in einem Loch (8) des Bügels (1), durch das sich die Stange erstreckt, festlegbar ist.

3. Klammer nach Anspruch 1 oder 2,
dadurch **gekennzeichnet ,** daß die Federanordnung (5) eine Schraubenfeder ist.

4. Klammer nach Anspruch 1, 2 oder 3,
dadurch **gekennzeichnet,** daß Zwischenlegscheiben (9) zwischen den Kabeln (12) und dem Träger (11) und ggf. zwischen den Kabeln (12) angeordnet sind.

5. Klammer nach Anspruch 4,
dadurch **gekennzeichnet** , daß jede Zwischenlegscheibe (9) nach unten offene Ausnehmungen (10) aufweist, so daß sie von oben auf den Bügel (1) aufsetzbar ist.

## Revendications

1. Dispositif de serrage pour fixer au moins un câble (12) sur une barre transversale (11), le dispositif comprenant un étrier en forme de U (1) qui contient le câble (12) et une plaquette de butée (4) pour répartir une pression de serrage sur le câble (12), et un dispositif de ressort (5) applique une force de compression adaptée sur la plaquette de butée (4), caractérisé par un levier de commande (6) qui permet de bloquer le dispositif de ressort dans le position comprimée afin de régler le serrage et permet la désolidarisation de l'action de blocage de telle sorte que le dispositif de ressort exerce sa force contre la plaquette de butée.

2. Dispositif de serrage selon la revendication 1, caractérisé en ce que le levier de commande comprend une tige munie d'une partie de blocage creuse (7) qui peut être bloquée dans un trou (8) ménagé dans l'étrier (1), Trou (8) dans lequel s'étend la tige.

3. Dispositif de serrage selon la revendication 1 ou 2, caractérisé en ce que le dispositif de ressort (5) est un ressort hélicoïdal.

4. Dispositif de serrage selon la revendication 1, 2 ou 3, caractérisé en ce que des plaquettes intermédiaires (9) sont placées entre le câble (12) et la barre transversale (11) et, aux endroits adaptés, entre les câbles (12).

5. Dispositif de serrage selon la revendication 4, caractérisé en ce que chaque plaquette intermédiaire (9) présente des creux (10) qui sont ouverts au fond afin de pouvoir être placés sur l'étrier (1) par le dessus.
